# EUROPEAN PATENT SPECIFICATION

(11) **EP 4 287 526 B1**
(45) Date of publication and mention of the grant of the patent: **28.01.2026**
(21) Application number: 22177102.5
(22) Date of filing: 02.06.2022
(51) Int. Cl.: H04B 7/185, H04B 10/118

(54) **METHOD AND DEVICE FOR SATELLITE COMMUNICATION**
VERFAHREN UND VORRICHTUNG ZUR SATELLITENKOMMUNIKATION
PROCÉDÉ ET DISPOSITIF DE COMMUNICATION PAR SATELLITE

(43) Date of publication of application: 06.12.2023
(73) Proprietor: General Atomics Synopta GmbH, 9034 Eggersriet (CH)
(72) Inventor: KUDIELKA, Klaus, 8049 Zürich (CH)
(74) Representative: RGTH

(56) References cited:
- EP-A1- 3 576 318
- WO-A2-2016/190934
- US-A1- 2018 270 010

## Description

### Technical field

The present invention concerns a method and a device for satellite communication according to the independent claims.

### Prior art

Methods for satellite communication are generally known from prior art. The communication is typically done by radio or optically. Using an optical system has various advantages such as a reduced weight and size of the terminals of the gateway. Furthermore, a reduction in power consumption but at the same time the use of a broader bandwidth is achieved.

US 2018/270 010 A1 discloses a free-space communication system.

The objective of the present invention is to improve a method for satellite communication such that the process of sending and receiving signals is more efficient as well as simplified.

### Summary of the invention

The present invention relates to a method for satellite communication wherein the method comprises a transmission of signals between at least one optical ground gateway and a telecommunication satellite. In particular, the method serves to transmit user signals from the ground gateway to the satellite. For this purpose, the ground gateway can comprise several terminals.

The ground gateway comprises a telescope with a common aperture for sending and receiving signals. The method further comprises using the full telescope aperture for receiving signals from the satellite and using at least two pre-defined sub-apertures within the telescope aperture for transmitting signals to the satellite. In other words, the sub-apertures are embedded into the aperture of the telescope. The term "transmit" is used equivalently to "send".

The communication between the optical ground gateway and the communication satellite is preferably achieved optically, especially by using an optical feeder link. The optical ground gateway is configured to transmit optical signals, which contain data to be transmitted, such as e.g., user data which can be forwarded to user units, via the satellite by means of the optical feeder link. The optical ground gateway is also configured to receive optical signals from the user units, via the satellite.

An optical transmission has the advantage of high transmission rates (larger than 1 Tbit per second). Furthermore, optical systems can be very precisely aligned, they are immune to interferences and tap-proof. Due to the shorter wavelength a smaller configuration of the antennas and thus also of the ground gateway is possible.

By using an optical feeder link significantly more user channels can be bundled due to the much higher available bandwidth. This can lead to a significant reduction in the number of ground gateways given the transmission capacity. Telecommunication satellites can transmit data of about 1 Tb/sec and usually use Ka-band gateways (the carrier frequency is around 20-30 GHz). In the following example the advantages are explained. The signals are transmitted with an average spectral efficiency of 2 bit/sec/Hz, overall, 800 Gbit/sec in 400 GHz bandwidth are transmitted from the ground to the satellite to the different user units. However, 3.5 GHz bandwidth per polarization in the Ka-band are licensed meaning that 7 GHz usable bandwidth per gateway is still available. Due to this according to known prior art, 60 ground stations are used parallel in a spatial division multiplex to provide a single satellite with the user signals.

In the optical frequency band (ca. 193,4 THz) a bandwidth of 4 THz is available and due to the strong bundling of the beam no license is required. In this way all bandwidth restrictions are solved and only one ground station is required for the communication.

The ground gateway uses a telescope with only one aperture for both sending signals to the satellite as well as for receiving signals from the satellite. According to the invention the full telescope aperture is used for receiving signals from the satellite, while only at least two pre-defined sub-apertures are used for transmitting signals to the satellite. Especially, not the full aperture is used for sending signals. In particular, the aperture is to be understood as a diameter of an objective of the telescope.

Using a common aperture for both sending and receiving signals has the advantage that signals which to be sent as well as received signals use a common optical path. This allows for example an effective and easy correction for optical distortions.

Using the full telescope aperture for receiving signals means that signals from the satellite are received by the entire aperture which allows the maximal antenna gain. In other words, the maximal efficiency of a receiving optical system of which the telescope is a part of, can be ensured.

On the other hand, using at least two pre-defined sub-apertures allows different advantages when it comes to transmitting signals to the satellite, one being to scale the optical transmission power. Using at least two pre-defined sub-apertures for transmitting signals means that these at least two pre-defined sub-apertures can be fed with signals which are then sent by means of the sub-apertures to the satellite. Especially after exiting the sub-apertures the signals propagate through free space.

In this way multiple sub-apertures embedded into a large receiving aperture can be used. This serves to increase the optical sending power while simultaneously using multiple resulting signal beams on preferably different carrier frequencies.

Especially, data, such as user data, to be transmitted is modulated onto at least two, especially exactly two, signals which can be orthogonal. The signals can be orthogonal in frequency and/or polarization. For example, a first signal can have an s-polarization being fed to a first sub-aperture, while another signal has a p-polarization being fed to a second sub-aperture. In particular, the data to be sent is modulated onto at least one, preferably two, side band of an optical carrier, thus a signal with a specified frequency and two side bands. The different signals being sent to different sub-apertures usually comprise different user data at different carrier frequencies (and thus are orthogonal). Those frequencies can preferably be orthogonal to each other. Advantageously, orthogonal signals containing data are simultaneously fed to at least two sub-apertures. The carrier frequency is to be understood as the unmodulated signal of a transmission laser of the ground gateway.

By sending multiple signals to multiple sub-apertures the optical transmission power can be scaled effectively. While typically the transmission power is restricted technologically, for example by the availability of optical amplifiers or by the sensitivity of optical elements in the optical system regarding the power density, sending different signals by means of different sub-apertures can effectively scale the optical transmission power without the typical drawbacks. Further, by using multiple signals, the transmitted data rate can be increased.

While the signals propagate through free space and will be received again on the side of the satellite, the signals can then be separated again. In other words, the free space propagation is used as a high-power beam combiner.

The method can further comprise a pre-definition of several sub-apertures within the telescope aperture, wherein at least two, preferably more than two, most preferred between four and eight, sub-apertures are pre-defined. In other words, the pre-definition is a division of the telescope aperture into several sub-apertures for sending signals to the satellite. In particular, a number between 2 and 10 sub-apertures can be predefined, especially four, six or eight sub-apertures. Especially, an even number of sub-apertures are pre-defined.

Especially, the sub-apertures are embedded into the aperture. They can have a fixed local position on the telescope aperture with a further fixed diameter. Their position and/or diameter is not dynamically adapted.

The pre-defined sub-apertures can have the same radial distance to a center of the telescope aperture. Neighboring sub-apertures can have the same circumferential distance to each other. In such a configuration, a uniform distribution of sub-apertures on the telescope aperture is achieved.

Advantageously, the telescope aperture has a first diameter, wherein each sub-aperture has a diameter smaller than half of the first diameter. In particular, each sub-aperture has a diameter smaller than a third or a fourth of the first diameter. In particular, each sub-aperture can have a diameter which is between 10 % and 45 %, preferably between 20 % and 30 %, of the first diameter. All sub-apertures can have the same diameter.

While the first diameter can be between 60 cm and 100 cm, especially between 75 and 85 cm, the second diameter is preferably between 20 cm and 30 cm. It has been found that using sub-apertures with larger diameters is disadvantageous due to optical turbulences in higher atmospheric layers and due to the necessary lead angle.

Data transmission is generally very dependent on weather conditions and other optical influences. Especially turbulences on atmospheric layers can distort the signal and in consequence reduce the quality of the data transmission.

According to the invention, the method comprises an adaptive post- and pre-compensation of optical wavefront distortions. In other words, the telescope can have an adaptive optical system which compensates the wavefront in both directions, thus before sending signals and after receiving signals. In particular, the adaptive optic system is configured to compensate the wavefront in real time.

In detail, the telescope can comprise a wavefront sensor to detect optical disturbances. Furthermore, a wavefront compensator, such as e.g., an active mirror, can be used to correct the sensed optical distortions. The compensator can be controlled by a control unit.

Preferably, based on an already measured wavefront of received signals from the satellite optical distortions can be sensed and thus used for post-correcting these distortions regarding the received signals. By the post-compensation, the wavefront of the received signal is flattened which increases the efficiency of receiving the signal. In other words, a receiving optical system can process the signal more effectively. Further, the information on the distortions from already received signals can be used for pre-correcting the wavefront of signals to be sent before sending them to the satellite. The pre-compensation is used for adapting the wavefront in such a way that optical distortions are overcome such that the transmission to the satellite is maximized.

Especially, the system can comprise using multiple power amplifiers for each sub-aperture. In other words, each sub-aperture has multiple power amplifiers assigned to it and the output of the multiple power amplifiers is spectrally combined to the respective sub-aperture in order to increase the transmission power. Thus, each signal to be fed to a sub-aperture can be amplified using multiple amplifiers. Furthermore, the output of the multiple power amplifiers can be coherently combined to the respective sub-aperture.

Preferably, the method comprises separating received signals and signals to be sent using a polarization beam splitter and a quarter wave plate. Since sharing the telescope at least to some degree (since the apertures for sending signals are smaller than the entire aperture), the received signals and the signals to be sent share a common pathway for at least some distance and the received signals and the signals to be sent have to be separated.

For this purpose, a polarization beam splitter and a quarter wave plate, in an angle of 45° to the polarization beam splitter, can be used. In this way the beam carrying all sending channels is separated from the beam carrying all receiving channels. The receiving channels and the sending channels relate to the frequency band of the signals to be sent and received respectively. Especially, the sending beam has a different polarization state as the receiving beam. A separation of the beams up to an order of magnitude of 6 is possible. By the above-described way the sending beam and the receiving beam are separated regarding their polarization.

Furthermore, the separation can be done spectrally. For this purpose, the method comprises separating received signals and signals to be sent using at least one optical filter making sure that the frequency of the sending channel is blocked on the receiving side regarding the received signal. For this purpose, an edge filter or an interference filter with deep edges (a so-called cavity filter) can be used. Preferably, the minimum channel distance between the sending channel and the receiving channel is greater than 20 nm. In addition, the method can comprise using two above-described optical filters one after another for achieving a fine separation of up to an order of magnitude of 10 to 11.

The method can comprise filtering of signals to be sent with regard to a frequency band of the signals to be received. In other words, with regard to a frequency of the receiving channel. For this purpose, the method can comprise using a filter which is located in the sending path just before the respective signals to be sent enter the common path which is shared by the received signals.

Laser sources used for the optical communication as well as any other optical amplifiers emit over the entire amplification bandwidth of the laser medium to a certain extent. This is referred to as amplified spontaneous emission (ASE). If the respective frequency band of this amplified spontaneous emission overlaps with the receiving channel, detectors in the receiving channel may be blinded by backscattered transmitted light from the common optical path. This is because spectral optical filters fitted in the receiving channel will transmit such leaked ASE light from the laser source in the direction of the detectors without any rejection. If detectors in the receiving channel are DC-coupled to subsequent amplifiers there is an increased risk of ASE reduced self-glare from separated detectors. Having a filter in the sending path just before the common path blocking the receiving channel self-glare from ASE light can be avoided.

The method can comprise suppressing an image frequency when transmitting signals from the satellite to the ground gateway and/or when transmitting signals from the ground gateway to the satellite.

In particular, the invention can relate to a method for satellite communication, wherein the method comprises a transmission of signals between at least one optical ground gateway and a telecommunication satellite, wherein when transmitting signals from the satellite to the ground gateway an image frequency is suppressed.

The image frequency is to be understood as an undesired carrier frequency that differs from the carrier frequency to which a receiver is tuned, by twice the intermediate frequency.

In detail, the method can comprise providing one or more signal pairs S1/S2. Each signal pair can be sent to a hybrid coupler and then to an optical I/Q-modulator. In this way a modulated signal S3 is generated. In other words, the signals S1 and S2 are converted to an optical carrier in a phase-coherent manner. In a phase coherent manner means that both, amplitude and phase of the signals are preserved. The signal pair S1/S2 can represent the data to be transmitted. Especially at least one, especially two, sidebands of the carrier are modulated by the signals S1 and S2. In particular both sidebands can be modulated independently from each other and can contain different data to be transmitted which can be separated again on the receiving side. In detail, a first side band of the carrier can be modulated by the signal S1 while the other can be modulated by the signal S2.

As a next step, optical frequency multiplexing can be done of several signals S3 which are modulated as explained above. This can be done by a multiplexer.

In addition, a power amplification by at least one amplifier can take place. The resulted modulated and amplified signal S4, in other words the feeder signal, can be transmitted. The feeder signal S4 comprises multiple signals S3 in frequency multiplex. Especially, multiple amplifiers can be used. For example, each modulated signal S3 can be sent to a separate amplifier wherein multiple amplifiers can be combined onto one sub-aperture of a telescope aperture to send the signal S4.

By using a hybrid coupler and then an optical I/Q-modulator the image frequency is suppressed. This is achieved by destructive inference after combining the signals in the I/Q-modulator.

Furthermore, the method comprises receiving the at last one signal S4. If the signal is sent by the gateway, the signal S4 is received by the satellite while when it is sent by the satellite it is received by the ground gateway. After receiving, an optical pre-amplification and demultiplexing of the signal S4 to one or more signals S5 takes place. The signals S5 are demodulated, fed to optical I/Q-demodulators and hybrid couplers, such that demodulated signal pairs S6/S7 are produced. In other words, the signal S5 is passively split and directed to multiple demodulators which are tuned to the different carrier frequencies such that the correct bands for signal reception are selected. The received signals S5 correspond to the sent signals S3, while the signal pairs S1/S2 correspond to the signal pair S1/S2. Each differently tuned demodulator "sees" the respective two sidebands of the signal with the respective tuned frequency, while other signal components of the compound signal S5 are suppressed by using a respectively tuned electrical bandpass filter.

The gateway as well as the satellite can both have a hybrid coupler as well as at least one I/Q-demodulator/modulator. The coupler can be designed as a two-way 90° hybrid coupler. Especially, the above-described modulator or demodulator can also function in both ways. As an advantage, no extremely narrow optical band pass filter is necessary for image or carrier suppression.

By the I/Q modulator and demodulator, analog optical modulators and demodulators are used. This results in an analog frequency conversion (instead of a digital modulation) and further enables the direct transmission of user signals, in other words user waveforms, on the optical feeder link. This automatically results in a combination of high spectral efficiency and high power efficiency (close to channel capacity). Furthermore, it avoids the digital processing of user waveforms (several 100 GHz of bandwidth) onboard the satellite.

When the signals are received by the satellite, the method further comprises forwarding the demodulated signal pairs S6 and S7 to user units via microwave. Furthermore, signals pairs can be transmitted to the ground gateway in a reverse direction.

Due to the multiplexer, the method comprises interleaving at least two signals S4, in other words feeder signals, in such a way that in the frequency spectrum the side band of a first of these signals is positioned between the two sidebands of the second signal. In particular, the method can comprise interleaving three signals in such a way that a sideband of a first signal is positioned between the two sidebands of the other two signals. This is achieved without the sidebands overlapping. The spectral distance between to neighboring sidebands of two different signals can be smaller than the sideband width and thus enables high overall spectral efficiency on the optical feeder link. This improves the spectrum usage of each channel.

On the receiving side three differently tuned receiver units can receive all six signals which are modulated on the respective sidebands of the three above-described signals simultaneously. Based on the demultiplexing and demodulation, the transmitted data can be extracted. On the sending side there can be different sending units which can each have a laser for producing an optical carrier. On the receiving side, there is at least one receiver unit which has at least one local laser oscillator. Different local laser oscillators can be tuned to different carrier frequencies. The different frequencies can be regarded as different channels. The frequency of the local laser oscillator does not have to be phase locked to the one of the lasers on the sending side, since a small frequency difference between carrier and local oscillator only results in a small frequency shift at the output on the receiving side or receiving optical system which can easily be corrected.

Since the optical modulation and demodulation done by the I/Q-modulator or rather demodulator convert only the frequency, the signals to be transmitted is effectively shifted in the frequency domain but otherwise remain the same. Thus, the spectral efficiency and the power efficiency is identical to the one of the data to be transmitted, in other words the signal pairs S1/S2.

Another advantage of the present invention is that the separation of the different signals can be achieved electrically. After the demodulation on the receiving side each differently tuned receiver unit "sees" the respective two sidebands of the signal with the respective tuned frequency or rather the respectively channel. Other signal components can be suppressed by using a respectively tuned electrical bandpass filter.

This allows a very dense optical frequency multiplex since the separation of the different channels is not done optically but electrically.

Since the data to be transmitted, in other words the signals, are modulated onto the carrier phase coherently, the frequency/phase stability of the laser producing the carrier corresponds directly to the frequency/phase stability of the signal.

In a different aspect the invention relates to a device for satellite communication comprising at least one optical ground gateway for transmitting signals to a telecommunication satellite and for receiving signals from the telecommunication satellite. The ground gateway comprises a telescope with a common aperture for sending signals and receiving signals, wherein the device is configured to use the full telescope aperture for receiving signals from the satellite and to use at least two pre-defined sub-apertures within the telescope aperture for transmitting signals to the satellite. The telescope can be part of a receiving optical system of the ground gateway. The ground gateway can further comprise a transmission laser for providing a carrier frequency whose side bands can be modulated with data to be sent, such as user data.

In particular, the device has an adaptive optical system comprising a wavefront sensor, a wavefront compensator as well as a control unit for pre- or post-compensation the wavefront. Especially, the device only has one adaptive optical system with only one wavefront sensor and only one wavefront compensator which can sense and compensate the wavefront in both directions. The use of only one adaptive optical system is enabled by having a common optical path due to sharing the telescope aperture for sending as well as receiving signals.

The device can further comprise a polarization beam splitter and a quarter wave plate and/or an optical filter for separating received signals and signals to be sent. Especially, the device comprises an optical filter for filtering signals to be sent with regard to a frequency band of the signals to be received.

The device can further comprise a hybrid coupler, at least one I/Q modulator, a multiplexer and an amplifier. Further, it can comprise a demultiplexer, at least one I/Q demodulator, a preamplifier, a laser and/or a laser oscillator.

Especially the device is configured to carry out the above-described method.

### Brief description of the figures

The figures show in a schematic representation:
- Figure 1: a flow diagram of a method according to the invention;
- Figures 1b and 1c: further flow diagrams;
- Figure 2: a device according to the invention;
- Figure 3: a top view of an aperture 12a of a telescope 12 of a ground gateway 11 of a device according to the invention;
- Figure 4: a sending unit of a device;
- Figure 5: a receiving unit of a device;
- Figure 6: a frequency spectrum of a multiplexed signal.

### Preferred embodiments

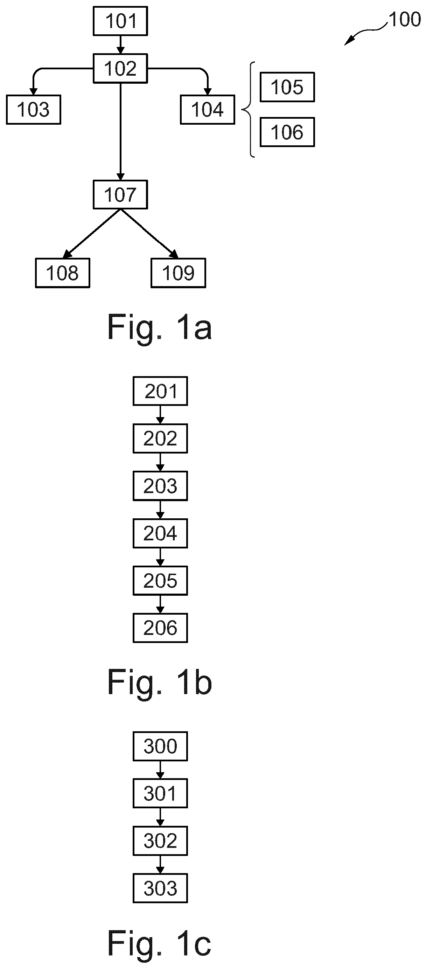

Figure 1a shows a flow diagram of a method 100 according to the invention. As it can be seen in figure 1a, the method 100 comprises the transmission 102 of signals between at least one optical ground gateway and a telecommunication satellite. The method 100 includes using 103 the full telescope aperture for receiving data from the satellite and using 104 at least two pre-defined sub apertures within the telescope aperture for transmitting data to the satellite. Advantageously, the method 100 comprises the pre-definition 101 of several sub-apertures within the telescope aperture.

Signals are sent by feeding 105 orthogonal signals to at least two sub-apertures. The signals contain data such as user data to be transmitted. Multiple power amplifiers can be used 106 regarding each sub-aperture for scaling the transmission power. Furthermore, the method 100 can comprise adaptive post and pre- compensation 107 of the wavefront of the received signals and the signals to be sent.

Since the signals to be sent and the received signals share the same aperture, they also share a common optical path such that the method 100 can comprise separating 108 the received signals and the signals to be sent using a polarizing beam splitter and a quarter wave plate. Furthermore, the separation 109 can be achieved by using an optical filter.

When sending signals from the satellite to the ground gateway or the other way around, the method 100 can comprise suppressing 201 an image frequency (see figure 1b). For sending signals the method 100 can comprise the following steps: One or more signal pairs S1/S2 are provided 202 which are fed 203 to a hybrid coupler and then to an optical I/Q-modulator. In this way a modulated signal S3 is generated 204. Several such signals S3 are frequency multiplexed 205 such that the signals are interleaved 206. The resulting multiplexed signal S4 can be power amplified by at least one amplifier before it is sent. Multiple power amplifiers can be used 106 for feeding multiple signals S4 to one sub-aperture as described above.

On the receiving side (see figure 1c), the method 100 can further comprise an optical pre-amplification and demultiplexing 300 of a received signal S4 to one or more signals S5 which are then demodulated 301 by an optical I/Q-demodulator and a hybrid coupler. In such a way demodulated signal pairs S6/S7 are generated 302 which can then be forwarded 303.

From the satellite the signal pairs S6/S7 can be sent via microwave to different user units 21. Furthermore, signals can be sent reversely from the user units 21 via microwave to the satellite 20 and from there optically to the ground gateway 11.

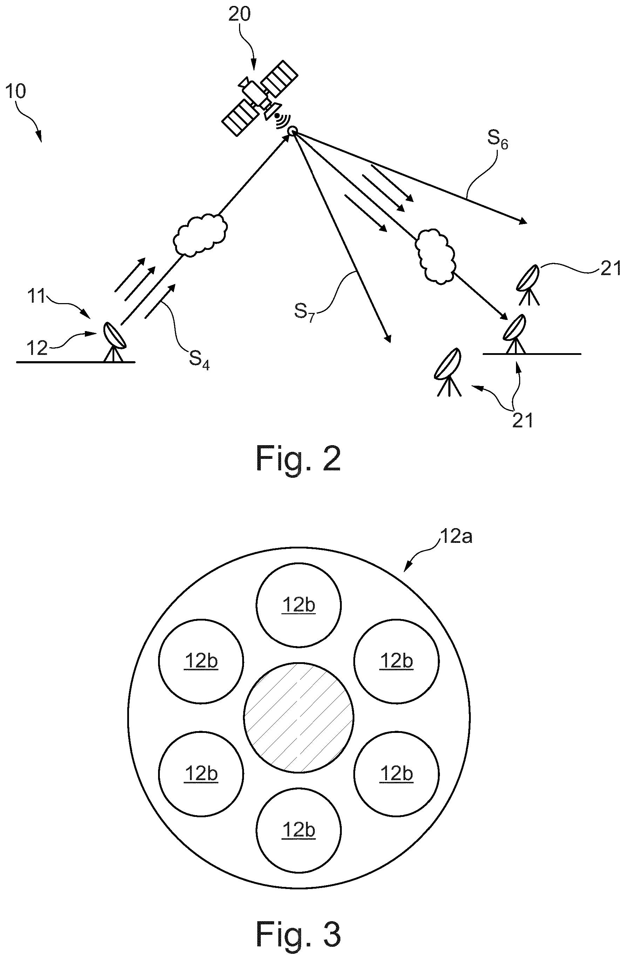

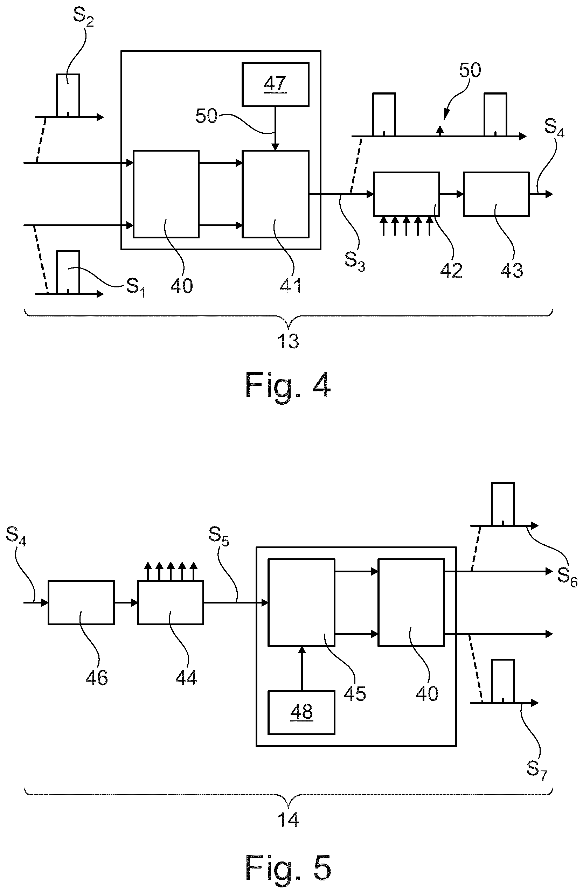

Figure 2 shows a device 10 according to the invention which includes a ground gateway 11 having a telescope 12. The device 10 can further comprise a sending unit 13 (see figure 4) as well as a receiving unit 14 (see figure 5) on the side of the ground gateway 11 as well as on the side of a satellite 20. Especially, an aperture 12a of the telescope 12 is used for sending signals as well as for receiving signals. It is thus part of the sending unit 13 as well as the receiving unit 14.

Signals S4, especially user signals, are sent by a sending unit 13 to the satellite 20 which can then forward demultiplexed and demodulated signal pairs S6/S7 towards user units 21. The other way around signals can also be received by the ground gateway 11.

Figure 3 shows a top view of an aperture 12a of a telescope 12 of a ground gateway 11. The aperture 12a is used in its entire diameter for receiving signals. Furthermore, there are sub-apertures 12b defined on and embedded in the aperture 12a for sending data. The sub-apertures 12b are arranged uniformly distributed in a circumferential direction, equally distanced to a center of the aperture 12a.

Figure 4 shows a sending unit 13 of a device 10 according to the invention. In detail, it is depicted how the signals S4 to be sent are created. First, two signals S1 and S2 are created which represent the data to be transmitted. These are combined in a hybrid coupler 40 and then transferred to an I/Q modulator 41. A laser 47 provides an optical carrier 50, thus a signal with a specified frequency and two side bands. The combination of the hybrid coupler 40 and the I/Q modulator 41 allows the independent modulation of both side bands of the carrier 50 with the signals S1 and S2 respectively such that a modulated signals S3 is created.

In a multiplexer 42 multiple modulated signals S3 are combined and such that the signals are interleaved and a multiplexed signal S4 is created. As a next step, at least one amplifier 43 is used for amplifying the multiplexed signal S4 to be sent. Above the multiplexer 42 and the amplifier 43, a frequency spectrum of a modulated signal S3 is shown. In the middle, there is the residual carrier 50 and, on the sides, there are the two different side bands of the signal S3.

In figure 5 a receiving unit 14 of a device 10 according to the invention is shown having a hybrid coupler 40 and an I/Q-demodulator 45. The sent multiplexed signals S4 are received by an optical pre-amplifier 46 and then sent to a demultiplexer 44. In this way, demultiplexed signals S5 are generated which are then forwarded to the I/Q-demodulator 45 and the hybrid coupler 40 such that demodulated signal pairs S6 and S7 are generated. Further, there is a laser oscillator 48 tuning the receiving unit to the frequency of the optical carrier of the sending unit 13.

The ground gateway 11 as well as the satellite 20 can both comprise multiple sending units 13 as well as receiving units 14 as illustrated in figures 4 and 5.

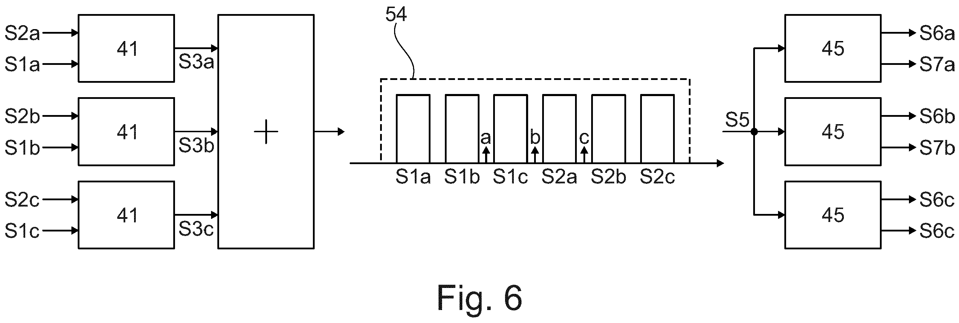

Figure 6 shows a multiplexed signal S4 to be sent. At the same time, figure 6 shows how the multiplexed signal is created on the sending side and how it is received on the receiving side.

On the left side of figure 6 three signal pairs S1/S2, namely S1a/S2a, S1b/S2b, S1c/S2c can be seen. These are modulated by three I/Q-modulators 41 to signals S3a, S3b and S3c. These signals are then multiplexed to form a signal S4 as it can be seen in the middle part of figure 6. The signal S4 consists of the three signals S3 multiplexed in the optical frequency domain such that the side bands carrying the signals S1 and S2 are interleaved.

After receiving S4 and demultiplexing it to signals S5, these are then demodulated by I/Q-demodulators 45 and the signals pairs S6a/S7a, S6b, S7b and S6c/S7c are retrieved.

### Reference signs

- 100: method for satellite communication
- 101: pre-definition of several sub-apertures within the telescope aperture
- 102: transmission of signals between at least one optical ground gateway and a telecommunication satellite
- 103: using the full telescope aperture for receiving signals from the satellite
- 104: using at least two pre-defined sub-apertures within the telescope aperture for transmitting signals to the satellite
- 105: feeding orthogonal signals to at least two sub-apertures
- 106: using multiple power amplifiers for each sub-aperture
- 107: adaptive post and pre- compensation
- 108: separating received signals and signals to be sent using a polarization beam splitter and a quarter wave plate
- 109: separating received signals and signals to be sent using at least one optical filter

- 200: method for satellite communication
- 201: suppressing an image frequency when sending signals from the satellite to the ground gateway and/or when sending data from the ground gateway to the satellite
- 202: providing one or more signal pairs
- 203: feeding each signal pair to a hybrid coupler and then to an optical I/Q modulator
- 204: generation of a modulated signal
- 205: optical frequency multiplexing of several modulated signals
- 206: interleaving the modulated signals

- 300: optical pre-amplification and demultiplexing of the signal to one or more signals
- 301: demodulation of each signal by an optical I/Q demodulator and a hybrid coupler
- 302: generation of demodulated signal pairs
- 303: forwarding the demodulated signal pairs

- 10: device
- 11: ground gateway
- 12: telescope
- 12a: aperture
- 12b: sub-apertures
- 13: sending unit
- 14: receiving unit

- 20: Satellite
- 21: user unit

- S1/S2: signal pairs
- S3: modulated signals
- S4: multiplexed signal
- S5: demultiplexed signals
- S6/S7: demodulated signal pairs

- 40: hybrid coupler
- 41: I/Q modulator
- 42: multiplexer
- 43: amplifier
- 44: demultiplexer
- 45: I/Q demodulator
- 46: pre-amplifier
- 47: laser
- 48: laser oscillator

- 50: optical carrier

## Claims

1. A method (100) for satellite communication,
wherein the method (100) comprises
a transmission (102) of signals between at least one optical ground gateway (11) and a telecommunication satellite (20),
the ground gateway (11) comprises a telescope (12) with a common aperture (12a) for transmitting signals and receiving signals,
wherein the method (100) further comprises using the full telescope aperture (12a) for receiving signals from the satellite (20) and
using at least two pre-defined sub-apertures (12b) within the telescope aperture (12a) for transmitting signals to the satellite (20),
**characterized in that**
the method (100) comprises an adaptive post and pre-compensation (107) for compensating optical wavefront distortions.

2. The method (100) according to claim 1, further
**characterized in that**
the method (100 comprises feeding (105) orthogonal signals to at least two sub-apertures (12b).

3. The method (100) according to claim 1 or 2, further
**characterized in that**
the method (100) further comprises a pre-definition (101) of several sub-apertures (12b) within the telescope aperture (12a),
wherein at least two, preferably more than two, most preferred between four and eight, sub-apertures (12b) are pre-defined.

4. The method (100) according to any one of claims 1 to 3, further **characterized in that**
the telescope aperture (12a) has a first diameter,
wherein each sub-aperture (12b) has a diameter smaller than half of the first diameter.

5. The method (100) according to claim 4, further
**characterized in that**
each sub-aperture (12b) has a diameter smaller than a third of the first diameter.

6. The method (100) according to any one of the preceding claims, further
**characterized in that**
the method (100) comprises using (106) multiple power amplifiers for each sub-aperture.

7. The method (100) according to any one of the preceding claims, further
**characterized in that**
the method (100) comprises separating (108) received signals and signals to be sent using a polarization beam splitter and a quarter wave plate.

8. The method (100) according to any one of the preceding claims, further
**characterized in that**
the method (100) comprises separating (109) received signals and signals to be sent using at least one optical filter.

9. The method (100) according to any one of the preceding claims, further
**characterized in that**
the method (100) comprises suppressing (201) an image frequency when transmitting signals from the satellite (20) to the ground gateway (11) and/or when transmitting signals from the ground gateway (11) to the satellite (20).

10. The method (100) according to claim 9, further
**characterized in that**
the method (100) comprises:
providing (202) one or more signal pairs (S1/S2),
feeding (203) each signal pair to a hybrid coupler (40) and then to an optical I/Q modulator (41) for a generation (204) a modulated signal (S3) such that the signals (S1/S2) are converted to an optical carrier in a phase-coherent manner,
optical frequency multiplexing (205) of several modulated signals (S3) by means of a multiplexer (42) and power amplification (207) by at least one amplifier (43), and
sending (208) at least one signal (S4).

11. The method (100) according to claim 10, further
**characterized in that**
each signal has two side bands,
wherein the method (100) comprises interleaving (206) several modulated signals (S3) in such a way that in a frequency spectrum the side band of a first signal is positioned between the two side bands of a second signal.

12. The method (100) according to one of claim 10 or 11, further **characterized in that**
the method (100) comprises:
receiving at least one signal (S4),
optical pre-amplification and demultiplexing (300) of the signal to one or more signals (S5)
demodulation (301) of each signal (S5) by at least one optical I/Q demodulator (45) and a hybrid coupler (40),
generation (302) of demodulated signal pairs (S6/S7).

13. A device (10) for satellite communication,
the device (10) comprises at least one optical ground gateway (11),
wherein the ground gateway (11) comprises a telescope (12) with a common aperture (12a) for sending signals to the satellite (20) and for receiving signals from the satellite (20),
wherein the device (10) is configured to use the full telescope aperture (12a) for receiving signals from the satellite (20) and to use at least two pre-defined sub-apertures (12b) within the telescope aperture (12a) for transmitting signals to the satellite (20),
**characterized in that**
the device (10) is configured to conduct an adaptive post and pre-compensation (107) for compensating optical wavefront distortions.

## Patentansprüche

1. Verfahren (100) für die Satellitenkommunikation,
wobei das Verfahren (100) Folgendes umfasst
eine Übertragung (102) von Signalen zwischen mindestens einem optischen Boden-Gateway (11) und einem Telekommunikationssatelliten (20),
wobei das Boden-Gateway (11) ein Teleskop (12) mit einer gemeinsamen Öffnung (12a) zum Senden und Empfangen von Signalen umfasst,
wobei das Verfahren (100) ferner das Verwenden der gesamten Teleskopöffnung (12a) zum Empfangen von Signalen vom Satelliten (20) und
das Verwenden von mindestens zwei vordefinierten Teilöffnungen (12b) innerhalb der Teleskopöffnung (12a) zum Übertragen von Signalen an den Satelliten (20) umfasst,
**dadurch gekennzeichnet, dass**
das Verfahren (100) eine adaptive Nach- und Vorkompensation (107) zum Kompensieren optischer Wellenfrontverzerrungen umfasst.

2. Verfahren (100) gemäß Anspruch 1,
ferner **dadurch gekennzeichnet, dass**
das Verfahren (100) das Einspeisen (105) von orthogonalen Signalen an mindestens zwei Teilöffnungen (12b) umfasst.

3. Verfahren (100) gemäß Anspruch 1 oder 2,
ferner **dadurch gekennzeichnet, dass**
das Verfahren (100) ferner eine Vordefinition (101) mehrerer Teilöffnungen (12b) innerhalb der Teleskopöffnung (12a) umfasst,
wobei mindestens zwei, bevorzugt mehr als zwei, am bevorzugtesten zwischen vier und acht Teilöffnungen (12b) vordefiniert sind.

4. Verfahren (100) gemäß einem der Ansprüche 1 bis 3,
ferner **dadurch gekennzeichnet, dass**
die Teleskopöffnung (12a) einen ersten Durchmesser aufweist,
wobei jede Unteröffnung (12b) einen Durchmesser aufweist, der kleiner als die Hälfte des ersten Durchmessers ist.

5. Verfahren (100) gemäß Anspruch 4,
ferner **dadurch gekennzeichnet, dass**
jede Teilöffnung (12b) einen Durchmesser aufweist, der kleiner ist als ein Drittel des ersten Durchmessers.

6. Verfahren (100) gemäß einem der vorstehenden Ansprüche,
ferner **dadurch gekennzeichnet, dass**
das Verfahren (100) das Verwenden (106) mehrerer Leistungsverstärker für jede Teilöffnung umfasst.

7. Verfahren (100) gemäß einem der vorstehenden Ansprüche,
ferner **dadurch gekennzeichnet, dass**
das Verfahren (100) ein Trennen (108) von empfangenen Signalen und zu sendenden Signalen unter Verwendung eines Polarisationsstrahlteilers und einer Viertelwellenplatte umfasst.

8. Verfahren (100) gemäß einem der vorstehenden Ansprüche,
ferner **dadurch gekennzeichnet, dass**
das Verfahren (100) ein Trennen (109) von empfangenen Signalen und zu sendenden Signalen unter Verwendung mindestens eines optischen Filters umfasst.

9. Verfahren (100) gemäß einem der vorstehenden Ansprüche,
ferner **dadurch gekennzeichnet, dass**
das Verfahren (100) das Unterdrücken (201) einer Bildfrequenz beim Übertragen von Signalen vom Satelliten (20) zum Boden-Gateway (11) und/oder beim Übertragen von Signalen vom Boden-Gateway (11) zum Satelliten (20) umfasst.

10. Verfahren (100) gemäß Anspruch 9,
ferner **dadurch gekennzeichnet, dass**
das Verfahren (100) Folgendes umfasst:
Bereitstellen (202) eines oder mehrerer Signalpaare (S1/S2),
Einspeisen (203) jedes Signalpaares an einen Hybridkoppler (40) und dann an einen optischen I/Q-Modulator (41) zur Erzeugung (204) eines modulierten Signals (S3), so dass die Signale (S1/S2) in einer phasenkohärenten Weise in einen optischen Träger umgewandelt werden,
optisches Frequenzmultiplexen (205) mehrerer modulierten Signale (S3) mittels eines Multiplexers (42) und Leistungsverstärkung (207) durch mindestens einen Verstärker (43), und
Senden (208) mindestens eines Signals (S4).

11. Verfahren (100) gemäß Anspruch 10,
ferner **dadurch gekennzeichnet, dass**
jedes Signal zwei Seitenbänder aufweist,
wobei das Verfahren (100) das Verschachteln (206) mehrerer modulierter Signale (S3) derart umfasst, dass in einem Frequenzspektrum das Seitenband eines ersten Signals zwischen den zwei Seitenbändern eines zweiten Signals positioniert ist.

12. Verfahren (100) gemäß einem der Ansprüche 10 oder 11,
ferner **dadurch gekennzeichnet, dass**
das Verfahren (100) Folgendes umfasst:
Empfangen mindestens eines Signals (S4),
optische Vorverstärkung und Demultiplexierung (300) des Signals in ein oder mehrere Signale (S5)
Demodulation (301) jedes Signals (S5) durch mindestens einen optischen I/Q-Demodulator (45) und einen Hybridkoppler (40),
Erzeugung (302) von demodulierten Signalpaaren (S6/S7).

13. Vorrichtung (10) für Satellitenkommunikation,
wobei die Vorrichtung (10) mindestens ein optisches Boden-Gateway (11) umfasst,
wobei das Boden-Gateway (11) ein Teleskop (12) mit einer gemeinsamen Öffnung (12a) zum Senden von Signalen an den Satelliten (20) und zum Empfangen von Signalen vom Satelliten (20) umfasst,
wobei die Vorrichtung (10) so konfiguriert ist, dass sie die gesamte Teleskopöffnung (12a) zum Empfangen von Signalen vom Satelliten (20) verwendet und mindestens zwei vordefinierte Teilöffnungen (12b) innerhalb der Teleskopöffnung (12a) zum Übertragen von Signalen an den Satelliten (20) verwendet,
**dadurch gekennzeichnet, dass** die Vorrichtung (10) so konfiguriert ist, dass sie eine adaptive Nach- und Vorkompensation (107) zum Kompensieren optischer Wellenfrontverzerrungen durchführt.

## Revendications

1. Procédé (100) de communication par satellite,
dans lequel le procédé (100) comprend
une transmission (102) de signaux entre au moins une passerelle optique terrestre (11) et un satellite de télécommunication (20),
la passerelle terrestre (11) comprend un télescope (12) avec une ouverture commune (12a) pour transmettre des signaux et recevoir des signaux,
dans lequel le procédé (100) comprend en outre l'utilisation de l'ouverture complète du télescope (12a) pour recevoir des signaux provenant du satellite (20) et
l'utilisation d'au moins deux sous-ouvertures prédéfinies (12b) dans l'ouverture du télescope (12a) pour transmettre des signaux au satellite (20),
**caractérisé en ce que**
le procédé (100) comprend une post-compensation et une pré-compensation adaptatives (107) pour compenser des distorsions du front d'onde optique .

2. Procédé (100) selon la revendication 1,
**caractérisé en outre en ce que**
le procédé (100) comprend l'alimentation (105) de signaux orthogonaux vers au moins deux sous-ouvertures (12b).

3. Procédé (100) selon la revendication 1 ou 2,
**caractérisé en outre en ce que**
le procédé (100) comprend en outre une prédéfinition (101) de plusieurs sous-ouvertures (12b) à l'intérieur de l'ouverture du télescope (12a),
dans lequel au moins deux, de préférence plus de deux, encore plus de préférence entre quatre et huit, sous-ouvertures (12b) sont prédéfinies.

4. Procédé (100) selon l'une quelconque des revendications 1 à 3,
est en outre **caractérisé en ce que**
l'ouverture du télescope (12a) a un premier diamètre,
dans lequel chaque sous-ouverture (12b) a un diamètre inférieur à la moitié du premier diamètre.

5. Procédé (100) selon la revendication 4,
**caractérisé en outre en ce que**
chaque sous-ouverture (12b) a un diamètre inférieur à un tiers du premier diamètre.

6. Procédé (100) selon l'une quelconque des revendications précédentes, **caractérisée en outre en ce que**
le procédé (100) comprend l'utilisation (106) de plusieurs amplificateurs de puissance pour chaque sous-ouverture.

7. Procédé (100) selon l'une quelconque des revendications précédentes, en outre **caractérisée en ce que**
le procédé (100) comprend la séparation (108) de signaux reçus et de signaux à envoyer à l'aide d'un séparateur de faisceau de polarisation et d'une lame quart d'onde.

8. Procédé (100) selon l'une quelconque des revendications précédentes, en outre **caractérisée en ce que**
le procédé (100) comprend la séparation (109) de signaux reçus et de signaux à envoyer à l'aide d'au moins un filtre optique.

9. Procédé (100) selon l'une quelconque des revendications précédentes, **caractérisé en outre en ce que**
le procédé (100) comprend la suppression (201) d'une fréquence d'image lors de la transmission de signaux du satellite (20) à la passerelle terrestre (11) et/ou lors de la transmission de signaux de la passerelle terrestre (11) au satellite (20).

10. Procédé (100) selon la revendication 9,
en outre **caractérisé en ce que**
le procédé (100) comprend :
fournir (202) une ou plusieurs paires de signaux (S1/S2),
l'alimentation (203) de chaque paire de signaux vers un coupleur hybride (40), puis vers un modulateur optique I/Q (41) pour la génération (204) d'un signal modulé (S3) de telle sorte que les signaux (S1/S2) soient convertis en une porteuse optique de manière cohérente en phase,
le multiplexage en fréquence optique (205) de plusieurs signaux modulés (S3) au moyen d'un multiplexeur (42) et l'amplification de puissance (207) par au moins un amplificateur (43), et
l'envoi (208) d'au moins un signal (S4).

11. Procédé (100) selon la revendication 10,
**caractérisé en outre en ce que**
chaque signal comporte deux bandes latérales,
dans lequel le procédé (100) comprend l'entrelacement (206) de plusieurs signaux modulés (S3) de telle manière que, dans un spectre de fréquences, la bande latérale d'un premier signal soit positionnée entre les deux bandes latérales d'un deuxième signal.

12. Procédé (100) selon l'une des revendications 10 ou 11,
**caractérisée en outre en ce que**
le procédé (100) comprend :
la réception d'au moins un signal (S4),
préamplification optique et démultiplexage (300) du signal en un ou plusieurs signaux (S5)
démodulation (301) de chaque signal (S5) par au moins un démodulateur optique I/Q (45) et un coupleur hybride (40),
génération (302) de paires de signaux démodulés (S6/S7).

13. Dispositif (10) pour la communication par satellite,
le dispositif (10) comprenant au moins une passerelle optique terrestre (11),
la passerelle terrestre (11) comprenant un télescope (12) avec une ouverture commune (12a) pour envoyer des signaux au satellite (20) et pour recevoir des signaux du satellite (20),
dans lequel le dispositif (10) est configuré pour utiliser l'ouverture complète du télescope (12a) pour recevoir des signaux provenant du satellite (20) et pour utiliser au moins deux sous-ouvertures prédéfinies (12b) à l'intérieur de l'ouverture du télescope (12a) pour transmettre des signaux au satellite (20),
**caractérisé en ce que** le dispositif (10) est configuré pour effectuer une post-compensation et une pré-compensation adaptatives (107) afin de compenser des distorsions du front d'onde optique.
